# EUROPEAN PATENT APPLICATION

(11) **EP 1 681 434 A1**
(43) Date of publication of application: **19.07.2006**
(21) Application number: 05258087.5
(22) Date of filing: 28.12.2005
(51) Int. Cl.: E06B 9/266, B23D 23/00

(54) **Slatted covering cutter**

(30) Priority: 12.01.2005 GB 0500540
(71) Applicant: Newell Limited, Tamworth, Staffordshire B79 7TW (GB)
(72) Inventor: Gibson, Simon, Leicestershire LE65 2SX (GB)
(74) Representative: Wilson, Alan Stuart

(57) **Abstract**

A slatted covering cutting die (48) is arranged to receive a slatted covering to be cut. The die defines a plurality of slots (404) and each slot is arranged to receive a predetermined number of slats of the covering. Proposed is also a packaged slatted covering comprising a plurality of slats comprising retaining means arranged to retain the slats together and spacing means arranged to support the slats in spaced relationship to each other.

## Description

The present invention relates to cutters for slatted coverings, particularly but not exclusively for cutting coverings such as window blinds e.g. Venetian blinds.

Venetian blinds typically comprise a headrail, bottom rail and a plurality of slats. When cutting such blinds to a required size a cutting member, such as a guillotine type blade, may be driven across the slats at a desired cutting point. The slats are usually packed together and located in an aperture during the cutting operation. It can be difficult to obtain a clean cut for all the slats when cutting such blinds.

According to a first aspect of the invention there is provided a slatted covering cutting die for receiving a slatted covering to be cut, the die defining a plurality of slots, each slot being arranged to receive a predetermined number of slats of the covering.

According to a second aspect of the invention there is provided a slatted covering cutter comprising a cutting die according to the first aspect of the invention and a cutting member having a slat cutting surface moveable across the slots of the die to cut slats of the covering received therein.

According to a third aspect of the invention there is provided a separation device arranged to separate slats of a slatted covering to be cut comprising spacing means arranged to space the slats at a predetermined distance from each other.

According to a fourth aspect of the invention there is provided an end cap for a slatted covering packaging comprising a separation device according to the third aspect of the invention.

According to a fifth aspect of the invention there is provided a packaged slatted covering comprising a plurality of slats, and being packaged in packaging that comprises retaining means arranged to retain the slats together and spacing means arranged to support the slats is spaced relationship to each other.

According to a sixth aspect of the invention there is provided a method of cutting a slatted covering comprising a plurality of slats comprises the steps of: locating a predetermined number of slats within slots of a cutting die; moving a cutting member having a slat cutting surface across the slots of the die to cut the located slats.

Embodiments of the present invention will now be described, by way of example only, with reference to the accompanying drawings, in which:
**Figure 1** shows a cutting machine according to an embodiment of the invention;
**Figure 2** shows a carriage plate of a covering cutter of the machine of Figure 1;
**Figure 3a** shows a die plate of a covering cutter of the machine of Figure 1;
**Figure 3b** shows a die plate of a covering cutter according to a further embodiment;
**Figure 4** shows a cutting die of the die plate of Figure 3a;
**Figure 5** shows a roller blind cutter of the machine of Figure 1;
**Figure 6** shows measuring means of the machine of Figure 1;
**Figure 7** schematically shows a packaged slatted blind, according to one embodiment, to be cut;
**Figure 8** shows a schematic sectional view through a part of the packaging and cutting die, of Figure 3a, as the blind, of Figure 7, to be cut is fed into the die;
**Figure 9** shows a schematic sectional view through part of a separating comb and blind slats;
**Figure 10** shows schematically a view in the direction of arrow A (Figure 9) of part of the separating comb;
**Figure 11** shows a cutting die according to another embodiment and a slatted blind and separator according to another embodiment;
**Figure 12a** shows a first exploded view of the cutting die of Figure 11;
**Figure 12b** shows a second exploded view of the cutting die of Figure 11;
**Figure 13** shows a sectional view through the cutting die of Figure 11; and
**Figure 14** shows the separator of Figure 11.

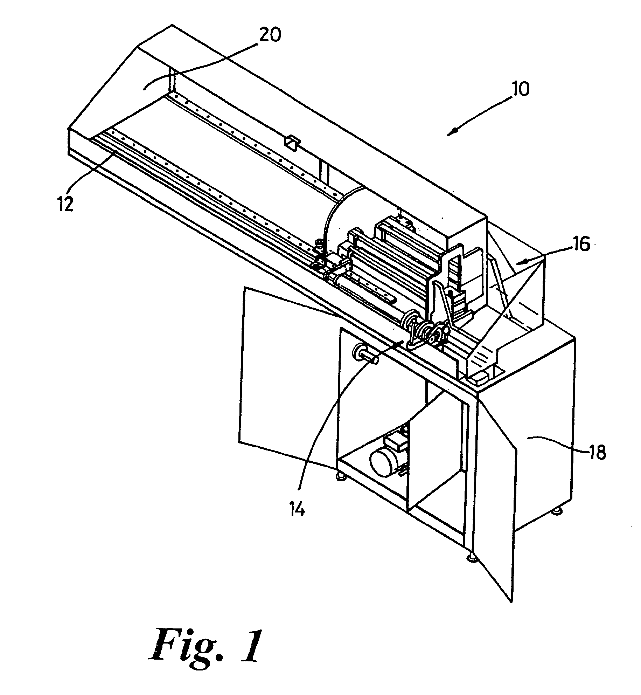

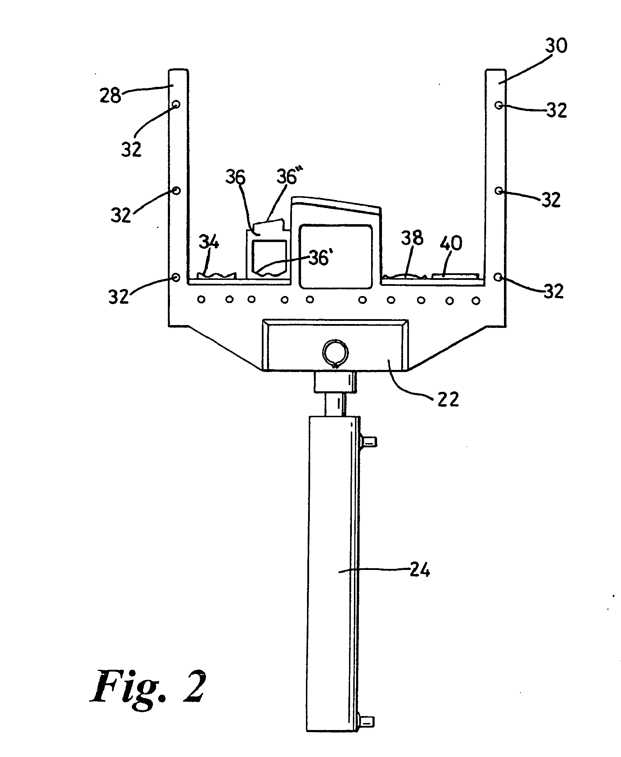

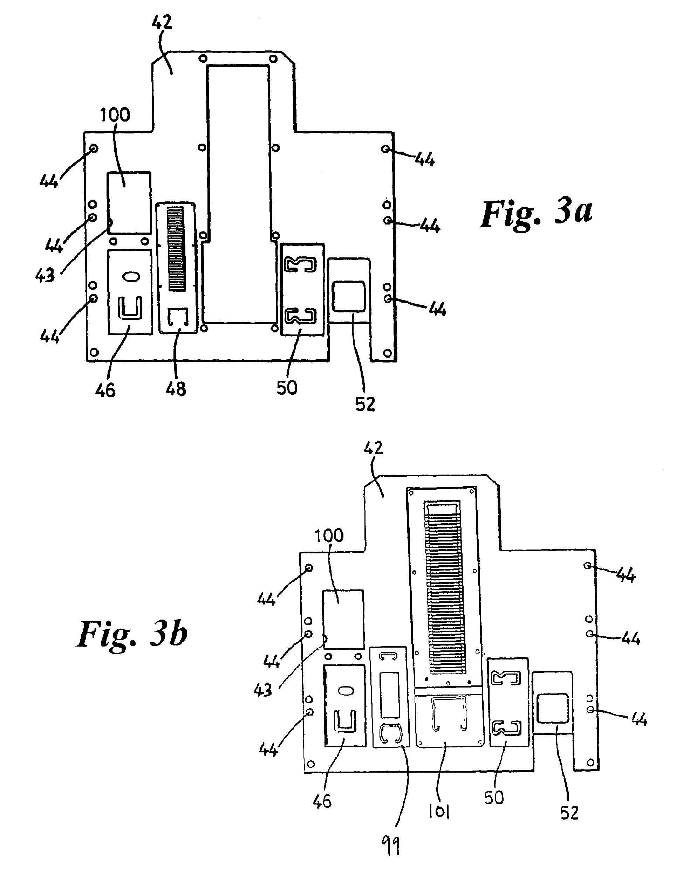

Referring to Figure 1, a blind cutting machine 10 suitable for cutting roller blinds, pleated blinds, headrails, metal Venetian blinds and roller lath/vertical blinds is shown. The machine 10 has a worktop 12, a roller blind cutter 14 at a first end of the worktop 12 and a window covering cutter 16 at the same end of the worktop 12. A cabinet 18 is provided beneath the worktop 12 at its first end to house mechanisms such as motors and a hydraulic unit which drive the roller blind cutter 14 and the window covering cutter 16. The worktop 12 is provided with a cover 20 to cover the roller blind cutter 14, window covering cutter 16 and any blinds being cut for safety reasons. Referring to Figures 2 and 3, the window covering cutter 16 comprises a carriage plate 22 having various cutting members attached to it - the form of these cutting members will be described in more detail below.

The carriage plate 22 is attached to a hydraulic ram 24 powered by a first electric motor 26 housed in the cabinet 18.

A front carriage guide 28 and a rear carriage guide 30 are provided to guide vertical movement of the carriage plate 22. Bolt holes 32 are formed in the carriage guides 28, 30. The various cutting surfaces are fixed to the carriage plate 22 and from its front side to its rear side, the carriage plate 22 comprises a vertical headrail blade 34, a corded metal shear blade 36, a pleated and corded shear blade 38 and a razor 40. Referring to Figure 2, the corded metal shear blade 36 has two cutting surfaces 36', 36" since it is required to have different cutting properties for different components of the covering to be cut - the first cutting surface 36' cuts metal and the second cutting surface 36" cuts wood. The first cutting surface 36' is arranged to cut by shearing an aluminium headrail. The second cutting surface 36" is arranged to cut a wooden slat by slicing-it 36" has a guillotine-type shape i.e. a straight edge angled with respect to the slots 404 in use.

Referring to Figure 3a, the window covering cutter 16 further comprises a die plate 42 having apertures 43 in it to locate various cutting dies corresponding to the type of window covering to be cut. The cutting dies are removeably mounted via simple bolt arrangements and can conveniently be replaced by alternative cutting dies as required. Corresponding bolt holes are provided in the cutting dies and the carriage plate 22. When a die is required to be replaced, its bolts are removed and the die is removable from the carriage plate 22. Aperture 100 (Figure 3a) on the die plate 42 is left vacant for a die to be added when required. Bolt holes 44 are provided along the front and rear sides of the die plate 42 and these bolt holes 44 are profiled to correspond to the bolt holes 32 of the front 28 and rear 30 carriage guides. Towards the front of the die plate 42 is provided a roller lath/vertical blind cutting die 46, adjacent which is a metal Venetian blind cutting die 48 (described in more detail below), adjacent which is a headrail blind cutting die 50, adjacent which is a pleated blind cutting die 52 closest to the rear side of the die plate 42. E ach die has one or more apertures through it suitable for receiving a different type of blind, including apertures for headrails, the blinds themselves, bottom rails and any other component features.

In other embodiments, cutting dies can be arranged in any other order along the die plate. For example the Venetian blind cutter can be arranged centrally on the die plate in the vacant central aperture shown in Figure 3a and its corresponding cutting surfaces will also be arranged centrally. Cutting surfaces corresponding to the rearranged cutting dies will be arranged correspondingly in such embodiments. For example, a die according to a further embodiment is shown in Figure 3b. This die is the same as the die shown in Figure 3a except a metal (aluminium) Venetian cutting die 99 is positioned next to the roller lath/vertical blind cutting die 46 and a wooden Venetian cutting die 101 is positioned centrally on the die plate.

On an opposite surface of the die plate 42 to the cutting dies, covering support attachments (not shown) are mounted to stabilise coverings being cut.

The die plate 42 is attached by means of the bolt holes 44 to the carriage guides 28, 30 such that the carriage plate 22 carries the blades 34, 36, 38, 40 across and flush with the cutting dies 46, 48, 50, and 52 in use.

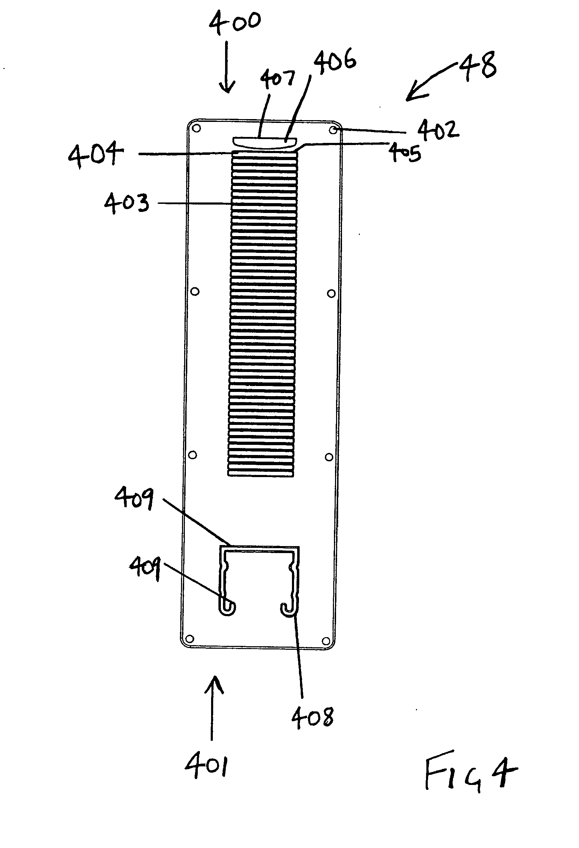

Referring to Figure 4, the Venetian blind cutting die 48 comprises a generally rectangular hardened steel die - the steel has a hardness of about 60 Rockwell C. The die has an upper end 400 and a lower end 401. The Venetian blind cutting die 48 has bolt holes 402 spaced around its perimeter to receive bolts for attaching the die 48 to the die plate 42.

The die 48 has a plurality of identical generally rectangular slots 404 formed through it. Each slot is arranged to receive one slat of a Venetian blind to be cut and is shaped to match the cross section of the slat and provide a clearance of about 0.2 mm around the perimeter of the slat. The slots are sized to be slightly larger in height than the thickness of the slats to be received so that they can be easily inserted into the slots 404. Each slot 404 is aligned with its long axis extending parallel to a short axis of the rectangular cutting die 48. The slots 404 are arranged side by side in a row such that their ends are aligned in a straight line parallel to a long axis of the cutting die 48 (see Figure 4). An upper surface 405 of each slot 404 is flat - this is so that its 404 shape corresponds to an upper surface of a slat which is received in it. The portions 403 of the die between the slots 404, which define the sides of the slots form spacers arranged to extend between the slats to space them apart.

Adjacent the upper end 400 of the cutting die 48, above the top end of the row of slots 404, a bottom rail receiving aperture 406 is formed through the die 48. The bottom rail receiving aperture 406 is larger than a slot 404 for receiving a slat since it is arranged to receive the bottom rail of the Venetian blind to be cut, which is larger than a slat. An upper surface 407 of the bottom rail receiving aperture is also profiled to correspond to an upper surface of the bottom rail being received.

The spacing between adjacent slots 404 is about a few mm, and the spacing between the uppermost slot 404 and the bottom rail receiving aperture is also a few mm. Both the slat and the bottom rail are formed of the same material, wood, and so the same cutting surface 36" can be used to cut them - hence the slots 404 and aperture 406 are positioned close together to facilitate an efficient cutting motion.

The slot spacing is small relative to the slot height and this is possible due to the balance of hardness and ductility of the metal from which the die 48 is formed - if the metal is incorrect, the slots 404 can become deformed.

Underneath the row of slots 404, adjacent a lower end of the die 48, there is provided a headrail receiving aperture 408 extending through the die 48. The profile of the headrail receiving aperture 408 is arranged to match the cross section of a headrail of the blind such that the headrail to be cut is receivable in the aperture 408. Upper surfaces 409 forming the downwardly facing profile of the aperture 408 are profiled to correspond to the upper surfaces of the headrail to be received.

The headrail receiving aperture 408 is spaced significantly from the lowermost slot 404 to facilitate use of a different cutting surface 36' to cut the headrail, which is typically formed of a different material to the slats and bottom rail - such as metal.

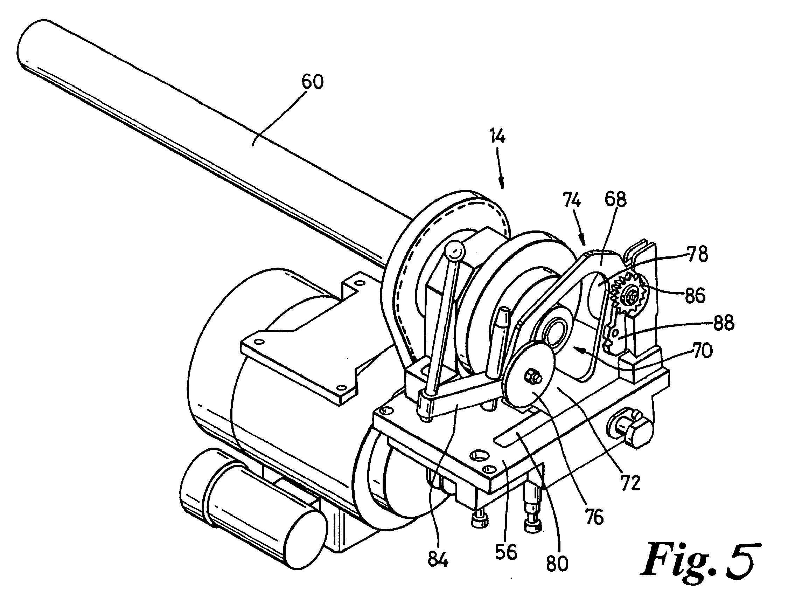

Referring to Figure 5, the roller blind cutter 14 comprises a base 56 mounted on the worktop 12 (not shown in Figure 4). Support means in the form of a clamp 58 mounted on the base 56 is provided to secure an elongate roller blind 60 in a cutting position. The clamp 58 is a standard screw type clamp. The support means is driven to rotate the blind about its longitudinal axis and a simple pulley and belt arrangement 62 is provided for this purpose - this is driven by an electric motor 64.

A mounting plate 68 is pivotally mounted to the base 56 and is pivotal in a plane perpendicular to the longitudinal axis of the roller blind 60 in the cutting position. The mounting plate 68 includes a central aperture 70 and has a thickness of about 4mm. The mounting plate 68 has a first face 72 and a second opposite face 74 which is closer to the centre of the roller blind 60 than the first face 72 when the roller blind 60 is in the cutting position.

A first cutting wheel 76 is freely rotatably mounted by a tightened screw, such that it is difficult to rotate until it contacts the driven roller blind 60 during the cutting action, towards a front side of the central aperture 70 and a second cutting wheel 78 is fixed to a rear side of the central aperture 70. The mounting plate 68 is moveable in a channel 80 formed in the base 56. Extending from the mounting plate 68 in this plane of motion is a handle 82 by which the mounting plate 68 is pivotally moveable in a first direction from the front to the rear of the machine 10 and a second opposite direction from the rear to the front of the machine 10.

Movement in the second direction is limited by a mounting part 84 of the handle coming into contact with a surface of the worktop 12 (not shown in Figure 5). An index gear 86 is associated with the second cutting wheel 78 along with an index arm 88 which serves to detect movement of the mounting plate 68 corresponding to a cutting movement which leads to rotation of the second cutting wheel 78 by 20°.

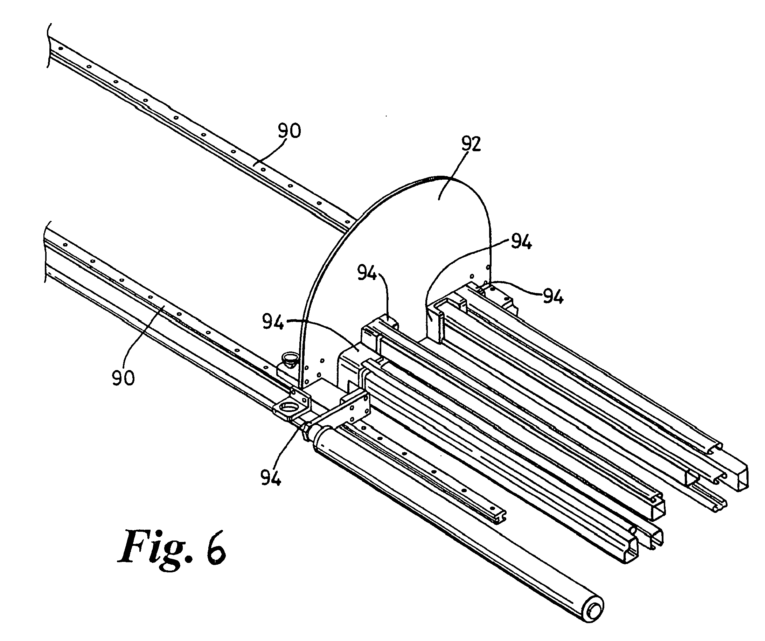

A measuring scale 90 (see Figure 6) is provided along front and rear edges of the worktop 12. The same scale 90 is used to measure the length of a roller blind to be cut by the roller blind cutter 40 and the length of any blind to be cut by the window covering cutter 16. An end plate 92 has blind support members 94 which are adapted to locate the end of a blind being cut. The cutting surfaces of both the roller blind cutter 14 and the window covering cutter 16 are not at the same point along the scale 90 but an offset is factored into the blind support members 94, which have pointers indicating the final length of the blind after cutting. The use of common measuring devices between the two cutters 14, 16 enables a significant saving in space compared to conventional machines.

In use, a blind to be cut using the window covering cutter 16 is positioned in the relevant cutting die 46, 48, 50, 52 and this may include a headrail, bottom rail, blind fabric and any other component part of the blind. A user may select and vary the length of the blind to be cut by locating the blind in the relevant support member 94 and adjusting the position of the end plate 92 on the measuring scale 90. The hydraulic ram 24 powered by the first electric motor 26 is then operated to force the carriage plate 22 vertically upwards guided by the front 28 and rear 30 carriage guides. The blind is cut in a conventional fashion by the passage of the relevant blade 34, 36, 38, 40 across apertures of the corresponding cutting die 46, 48, 50, 52.

Operation of the slatted Venetian blind cutter 36, 48 will be now described in more detail.

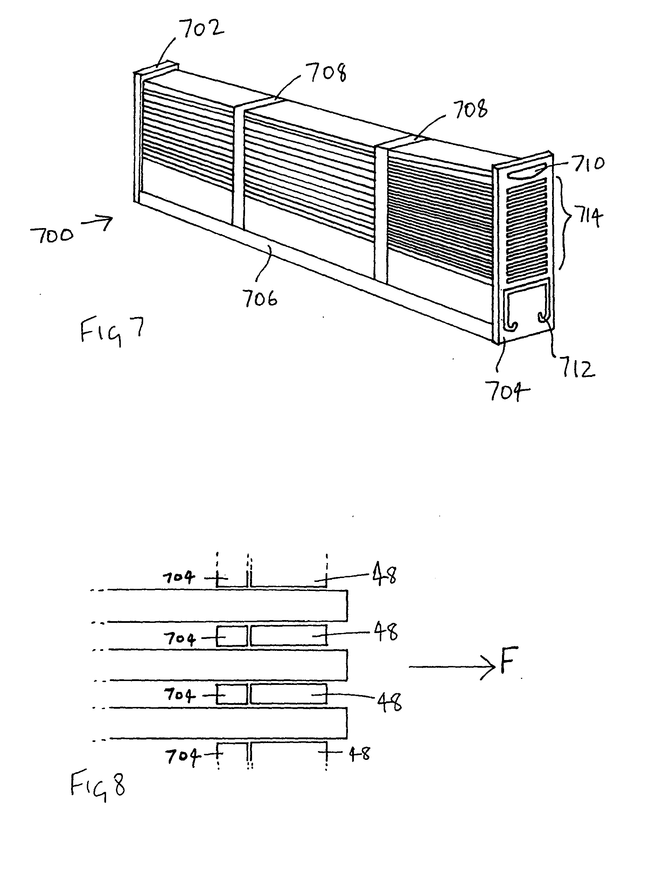

Referring to Figure 7, in this embodiment the Venetian blind components are provided in packaging 700 comprising a first end cap 702 which is a generally rectangular plastic cap and a second end cap 704. The second end cap 704 is also generally rectangular and is formed of plastic.

The packaging 700 also comprises a base 706 and the blind components i.e., headrail, slats and bottom rail are contained on the base 706 between the two end caps 702, 704. Straps 708 are used to tightly tie the components to the base 706. The second end cap 704 has a plurality of component receiving apertures formed through it. At an upper end of the end cap 704, a bottom rail receiving aperture 710 is provided. At a lower end of the end cap 704, a headrail receiving aperture 712 is provided. Between these apertures 710, 712 a plurality of slots 714 are provided for receiving slats of the blind. The component receiving apertures are aligned to correspond with the receiving apertures 404, 406, 408 of the Venetian blind cutting die 48. The aperture size and spacing is substantially identical.

The packaging 700 also comprises a cover (not shown) such as a cardboard cover or plastic cover or vacuum packaging, to prevent damage to the blind components during storage/transport e.g. when the packaging 700 is on a shelf of a retail outlet.

When a user wishes to cut the components of the Venetian blind, the cover of the packaging is removed. The second end cap 704 is then placed against the cutting die 48 (see Figure 8) with the cutting die apertures aligned with the end cap apertures. The blind components are then manually fed through the die apertures by pushing them through in the direction of arrow F (see Figure 8). The straps 708 hold the components of the blind together during this process, but the end of the slats and rails can flex apart to allow them to be pushed through the die 48.

When the blind components are individually in place e.g. the slats in each slot 404, the end plate 92 is manoeuvred to allow a desired length of the blind as measured on the measuring scale 90 to be cut. When the hydraulic ram 24 is operated, the blade 36 passes over the slots 404 and apertures 406, 408 of the cutting die 48. During this operation the first cutting surface 36' passes over the headrail receiving aperture 408 to cut the headrail located in it and the second cutting surface 36" passes over the slots 404 and bottom rail receiving aperture 406 to cut the slats and bottom rail located in them. As previously described, the upper surfaces of the components of the Venetian blind i.e. the slats, headrail and bottom rail correspond to the upper surfaces of their respective apertures and this increases the cleanness of cut achieved in the cutting operation since less movement of the blind components is permitted during cutting. As the blade 36 impacts on the components, they are initially moved upwards into engagement with the upper surface of the respective aperture before being cut through cleanly. Obviously, in other embodiments, the blade may move vertically downwards or laterally and a different surface, e.g. a bottom or side surface of the apertures may be required to correspond in shape to the respective surface of the blind components.

The cutting surfaces 36', 36", in another embodiment, may be any suitable shape.

In use, when a roller blind 60 is to be cut, it is placed in the clamp 58 of the roller blind cutter 14 following which the clamp 58 is tightened. The roller blind 60 is driven by the second electric motor 64 and the mounting plate is moved via the handle 82 in the first direction from the front of the machine 10 towards the rear of the machine 10. During this movement of the mounting plate 68, the first cutting wheel 76 cuts through the entire blind 60. This includes a blind tube 96 and a fabric covering 98 wrapped around the tube 96. The blind 60 is covered in a shrink wrap material which serves to hold the fabric 98 tightly against the blind 96 throughout the cutting process. The handle 82 is next used to bring the mounting plate 68 back in an opposite direction 90 from the rear of the machine 10 to the front of the machine 10. In this movement the second cutting wheel 78 cuts through the fabric 98 of the blind 60 but not the tube 96 since the movement of the mounting plate 68 is limited by abutment of the mounting part 84 on the worktop 12. Driven rotation of the blind ensures that the fabric 98 is cut around the entire circumference of the tube 94. The thickness of the mounting plate 68 is about 4mm and therefore the finished roller blind comprises an edge of the fabric covering 98 which is offset by about 4mm from the edge of the tube 96. Advantageously the roller blind cutter 14 provides an efficient means of producing a finished roller blind having a fabric covering edge which is inset from an edge of the tube mounting the fabric covering.

Upon completion of the movement of the mounting plate 68 in the opposite direction, the index arm 88 forces the movement of the index gear 86 by one notch on the gear 86 and this is equivalent to 20° of movement in the present embodiment. Advantageously, a different part of the second cutting wheel 78 is then used for the next roller blind to be cut. In this way an efficient means of using the entire cutting surface of the second cutting wheel 78 is provided.

It has been found beneficial to fix the second cutting wheel 78 during cutting of the fabric 98 alone since this prevents fraying of the fabric during the cutting process. When cutting both the tube 96 and the fabric 98, it has been found that free mounting of the first cutting wheel 76 provides an efficient cutting operation - therefore no indexing means is necessary in association with the first cutting wheel 76.

Beneficially the roller blind cutter 14 and the window covering cutter 16 use the same measuring scale 90. This gives rise to a significant saving in space compared to previous machines - in which roller blind cutters and other window covering cutters were not provided on the same machine.

In another embodiment of the invention, the slatted covering cutter is provided alone, without the other cutters on the same die plate. The form of the cutting die of this embodiment is exactly the same as the die 48 of the first embodiment. The cutting member of this embodiment is identical to the blade 36 of the first embodiment. A similar hydraulic ram powering mechanism is also used in this embodiment.

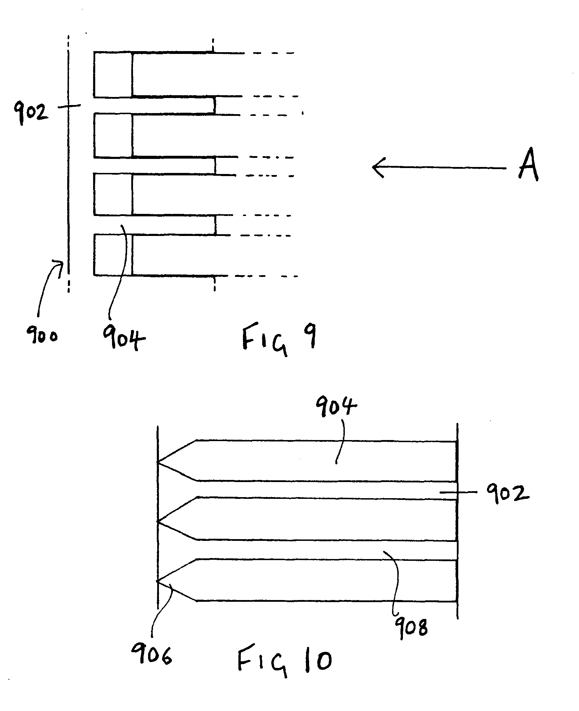

Referring to Figures 9 and 10, in another embodiment of the invention, the Venetian blind packaging does not include an end cap which separates the blind components exactly as required for presentation to the cutting die. Instead, a distinct separating means is provided. This is provided in the form of a separating comb 900 having a stem 902 from which separating teeth 904 extend laterally. The comb 900 is formed from plastic and the teeth extend between each blind component e.g. individual slats to separate them by the required spacing. The separating comb 900 is arranged to separate ends 906 of the blind components to facilitate loading of the ends into the apertures of the cutting die. The separating comb 900 may be provided inside the packaging or it may be provided totally separately for use after the packaging has been opened.

Referring to Figure 10, the teeth 904 of the comb 902 have tapered end 906 so that when components e.g. slats of the blind come into engagement with the ends 906, they are individually urged into apertures 908 between the teeth 904. In this way each slat is easily separated by a required distance i.e. corresponding to the slot spacing on the cutting die.

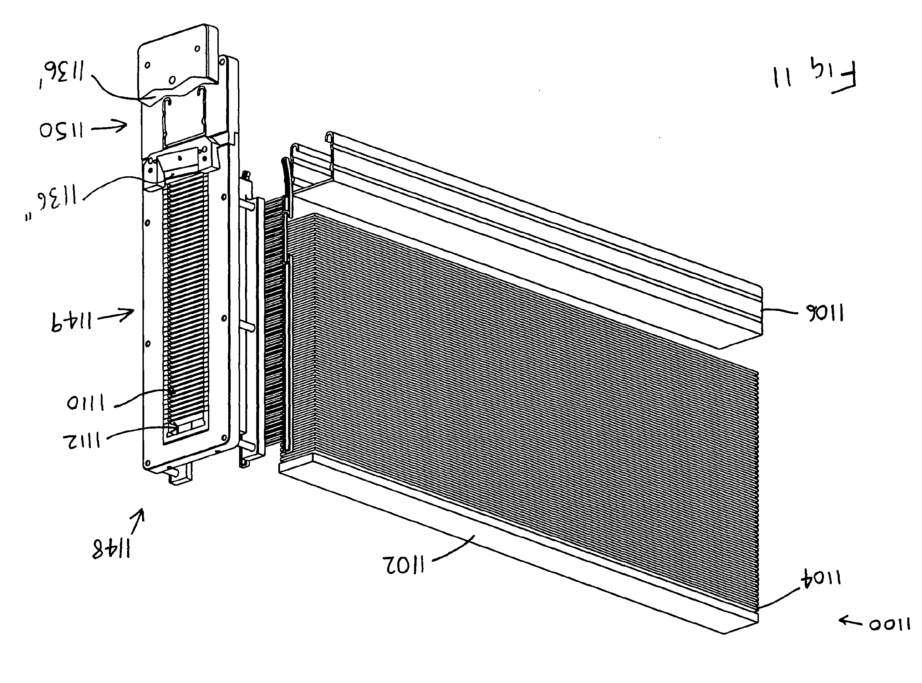

Referring to Figure 11, in a further embodiment of the invention, an alternative Venetian blind cutting die 1148 and corresponding cutting surfaces 1136', 1136" are provided for cutting a Venetian blind 1100. The cutting die 1148 and cutting surfaces 1136', 1136" are arranged on a blind cutting machine 10' not shown, similar to the machine of the above described embodiment.

In this embodiment, the blind 1100 comprises a wooden bottom rail 1102, a plurality of wooden slats 1104 and a metal headrail 1106. In this embodiment there are forty-nine slats 1104. In other embodiments there may be more or less slats than this. In different embodiments the width of each slat varies, for example it can be between 18mm and 60mm. In this embodiment it is about 35mm. The form of the components 1102, 1104, 1106 of the blind 1100 are similar to those of the Venetian blind components of the first described embodiment.

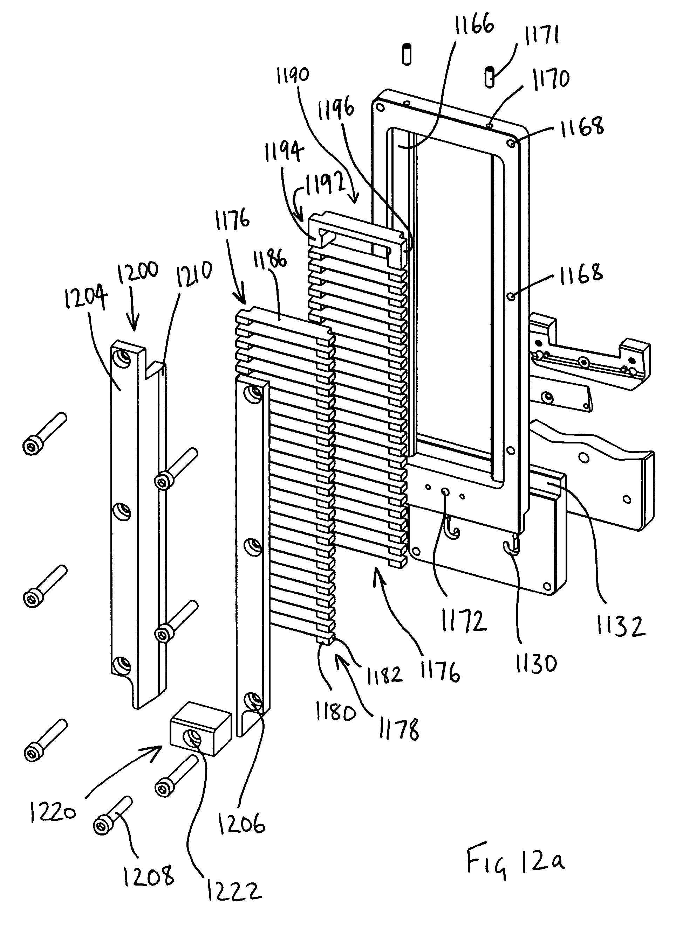

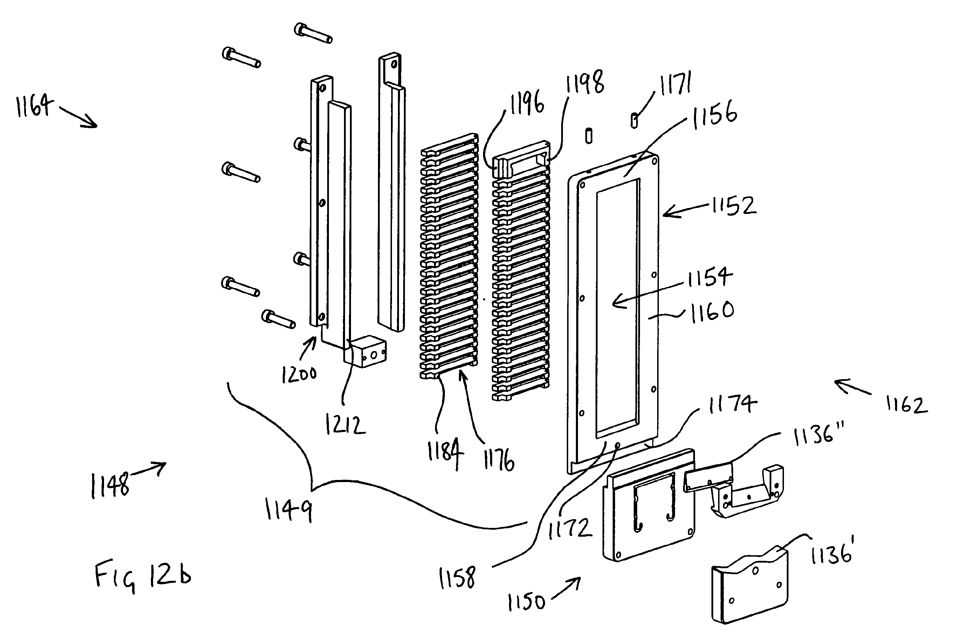

A schematic exploded view of a Venetian blind cutting die 1148 is shown in Figures 12a and 12b. The cutting die 1148 comprises two parts. Firstly, there is a bottom rail and slat die 1149 and secondly there is a headrail die 1150. The slat and bottom rail die 1149 comprises a frame 1152 which is generally rectangular in cross-section and has a rectangular aperture 1154 through its centre. The frame 1152 has an upper frame wall 1156, a lower frame wall 1158 and side frame walls 1160 which define the aperture 1154 from a first, front direction 1162 of the die 1148. In use, components of the blind 1100 are passed from an opposite, rear direction 1164 to the front direction 1162 through the die 1148. The rear 1164 part of the side walls 1160 of the frame 1152 are recessed to provide side flange walls 1166 at a front part of the frame 1152. Bolt holes 1168 are provided at regularly spaced intervals extending in the direction between the front 1162 and rear 1164 of the frame 1152. Grub screw receiving apertures 1170 are provided extending perpendicularly to the bolt holes 1168 in the top wall 1156 of the frame 1152. The grub screw receiving apertures 1170 extend downwardly from a top surface of the upper wall 1156. The grub screw receiving apertures 1170 intercept the uppermost bolt holes 1168 provided in the side walls 1160 and are arranged to receive grub screws 1171. The lower wall 1158 of the frame 1152 also includes a bolt hole 1172, which is equally spaced from each of the side walls 1160.

At a lower end of the bottom wall 1158 a headrail die engaging formation 1174 is provided. In this embodiment the headrail die engaging formation 1174 is in the form of a recess provided in the front 1162 of the bottom wall 1158. The recess 1174 forms a forward facing rectangular step.

The slat and bottom rail die 1149 also comprises a plurality of substantially identical web elements 1176. In this embodiment forty-nine web elements are provided. In Figures 12a and 12b they are shown as two sets for clarity. The web elements are generally elongate - their length is greater than the width of the aperture 1154 of the frame 1152 (i.e. from the front 1162 direction) and slightly less than the distance between the side walls 1160 of the frame 1152 at their rear 1164 recessed parts. Since each web element 1176 is essentially identical, a single web element 1176 will be described in detail.

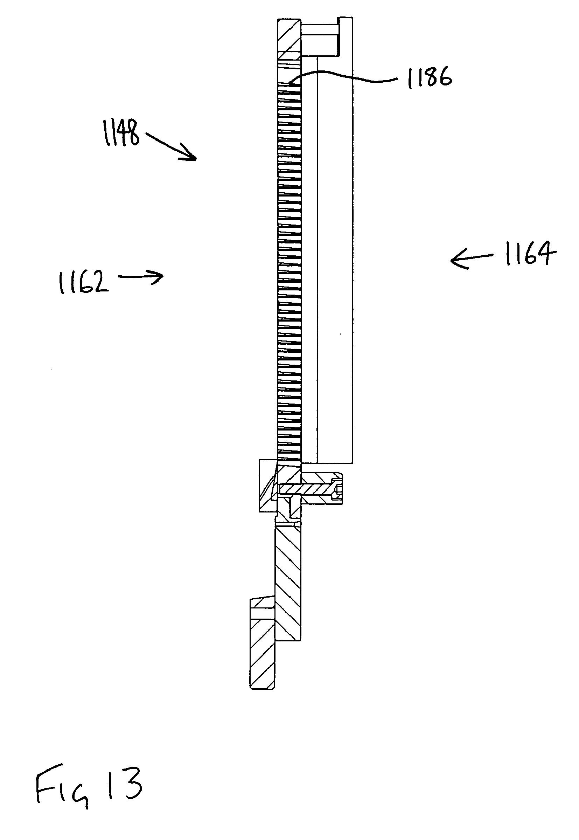

The web element 1176 comprises a spacer block 1178 at each of its sides. The spacer block 1178 has a rearwardly 1164 facing flat surface 1180 and a sidewardly facing flat surface 1182. The spacer block 1178 also has a front 1162 facing flat surface 1184 which is profiled to correspond and cooperate with the rearwardly 1164 facing flange 1166 of the side wall 1160 of the frame 1152 in use (described below). The web element 1176 includes a relatively thin, elongate strip 1186 which joins the spacer blocks 1178. The strip 1186 is integrally joined to upper ends of the spacer blocks 1178. Referring to Figure 13 which shows a cross-section view of the assembled Venetian blind cutter 1148, it can be seen that the strip 1186 of the web element 1176 is generally tapered in cross-section profile such that it becomes narrower from the front 1162 to rear 1164 direction.

The slat and bottom rail die 1149 also comprises a bottom rail locating element 1190. The bottom rail locating element comprises spacer blocks 1192 at its sides having a rearwardly facing surface 1194, a sidewardly facing surface 1196 and a forwardly facing surface 1198 similar to the corresponding surfaces on the web elements 1176.

The dimensions of the web elements 1176 and bottom rail locating element 1190 are such that, in this embodiment, when forty-nine of the web elements 1176 and the bottom rail locating element 1190 are placed adjacent to each other, they locate tightly within the recessed rear part of the frame 1152. Their 1176, 1190 lengths are such that they fit tightly within the rear recessed part of the frame 1152 and their heights are such that they fit tightly between the top wall 1156 and the bottom wall 1158. In this position, the front facing surfaces 1184, 1198 of the elements 1176 and bottom rail locating element 1190 respectively abut against the rearwardly facing flanges 1176 of the side walls 1160. Also in this position, as seen in Figure 11, a desired series of slots 1110 are formed, each slot 1110 being arranged to receive one slat 1104 of the blind 1000 (similarly to the slots 404 of the previously described embodiment). A bottom rail receiving aperture 1112 is also formed by the bottom rail locating element 1190 which forms a larger aperture corresponding to the profile of the bottom rail 1102.

The slat and bottom rail die 1149 further comprises side clamps 1200. Each side clamp comprises an elongate strip 1204 having bolt holes 1206 equally spaced along the strip 1204 and corresponding, in use, to the positions of the bolt holes 1168 on the frame 1152. These bolt holes 1168, 1206 are all profiled to receive bolts 1208 in order to locate the side clamps 1200 in a desired position relative to the frame 1152 when the bolts 1208 are in place in use. Each side clamp 1200 includes a forwardly extending wall 1210 extending from a front part of each elongate strip 1204. The forwardly extending wall 1210 has a forwardly facing bearing surface 1212 which is arranged to bear against the rearwardly facing flat surfaces 1180, 1194 of the spacer blocks 1178, 1192 of the web elements 1176 and bottom rail locating element 1190 respectively.

A lower guide block 1220 comprising a generally rectangular block having a bolt hole 1222 through it is also provided and arranged to correspond in position to the bolt hole 1172 of the frame 1152 in use.

The headrail die 1150 comprises a headrail receiving aperture 1130 extending through it between the front 1162 and rear 1164 directions. At its upper end the headrail die 1150 comprises a slat and bottom rail die engagement means 1132. This engagement means 1132 is in the form of a recessed rear part of the die 1150. The recessed part forms a rearwardly facing rectangular step 1132 which corresponds in shape to the forwardly facing rectangular step 1174 of the frame 1152 such that when the two steps 1132 and 1174 are brought together into engagement, they fit together such that a flat front and rear surface is provided for the Venetian blind cutting die 1148.

In use, the Venetian blind cutting die 1148 is assembled by placing the web elements 1176 and bottom rail locating element 1190 in series in the rearwardly facing recessed portion of the frame 1152 (see Figures 12a and 12b). The side clamps 1200 and lower guide block 1220 are placed into position such that the forwardly facing wall 1212 of the side clamps 1200 abuts against the rearwardly facing surfaces 1180, 1194 of the spacer blocks of the web elements and bottom rail locating element respectively. The side clamps serve to tightly clamp the web elements and bottom rail locating element against the rearwardly facing flanges 1166 of the frame 1152. Bolts 1208 are passed through the bolt holes 1206, 1222 and 1168, 1172 respectively. The grub screws 1171 are then tightened through the grub screw receiving apertures 1170 to ensure the bolts are correctly clamped in place. By interengagement between the forwardly facing rectangular step 1174 of the frame 1152 and the rearwardly facing rectangular step 1132 of the headrail die 1150, a die comprising a desired series of slots and apertures is obtained to receive all of the components 1102, 1104, 1106 of the blind 1100. This is similar to the previously described embodiment of the invention (shown in Figure 4).

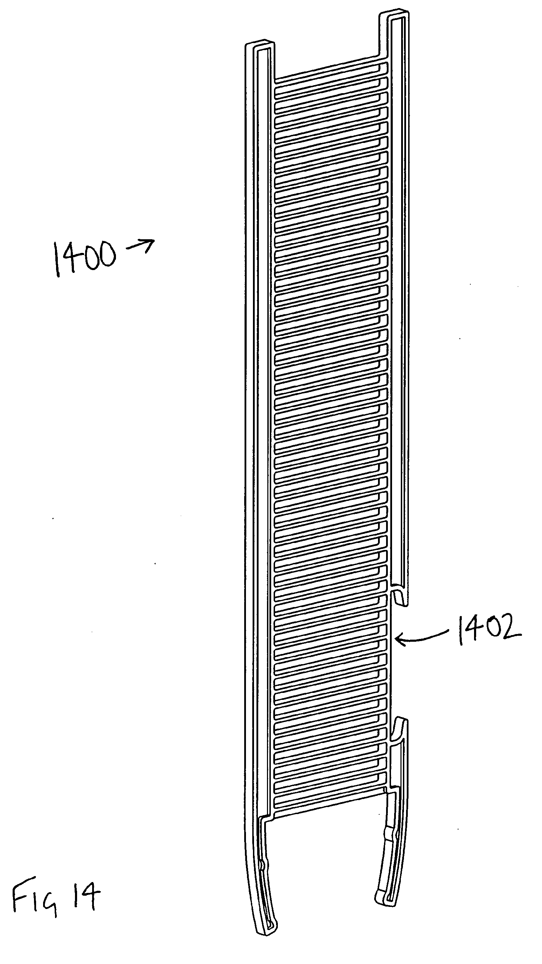

Referring to Figure 14 there is shown a separator 1400 having a plurality of component receiving apertures formed through it. The separator 1400 separates components of the blind 1100 in the same way that the second end cap 704 does in the previously described embodiment. In one of the side walls of the separator 1400 there is a notch 1402.

In use, the Venetian blind cutting die 1148 is used in conjunction with cutting surfaces 1136, 1136' in a similar manner to the way in which the cutting die 48 of the previously disclosed embodiment is used. Advantageously, in this embodiment the die 1148 is formed from separable, replaceable web elements 1146 and bottom rail locating element 1190. The headrail die 1150 is also separate. Therefore if damage occurs to any particular element, 1176, 1190 or the headrail die 1150 then the damaged part can be removed and replaced independently of other non-damaged parts. For example, if a particular web element 1176 is damaged then the bolts 1208 can be removed in order to remove the side clamps 1200 and allow the damaged web element 1176 to be removed on its own. The damage web element 1176 can be easily replaced with a new, non-damaged web element 1176 and the side clamps 1200 and bolts 1208 replaced. It is easier, cheaper and more convenient to replace a single web element 1176 than to replace a complete die.

Also advantageously, since the die 1148 is in two parts 1149, 1150 it is easy to assemble the die 1148 on the blind cutting machine 10. This is because one portion, for example the larger slat and bottom rail die 1149, can be bolted into place before attaching the other, smaller headrail die 1150 portion which simply needs to be attached to the slat and bottom rail die 1149 for correct alignment before bolting in place on the machine 10.

In another embodiment, the packaged slatted blind includes a valance cover for the metal head rail in the packaging. In this embodiment the valance cover (not shown) is located and held in the notch 14 of the separator 1400 and is thus conveniently packaged. In operation, when the valance cover is required to be cut, it is located in an elongated part of the aperture of the bottom rail locating element 1190 after all of the other necessary cuts have been made. Therefore the machine in this embodiment is operated as previously described and the valance cover is cut separately by being located on its own in the upper elongated aperture part of the bottom rail locating element 1190. This elongated part can be seen in Figures 12a and 12b.

In other embodiments none, or only some, of the blind components may be provided pre-spaced for introduction to the cutting die. For example, perhaps only the slats are spaced in advance by an end cap of the packaging or a separating comb. In this case, the headrail would need to be manually inserted separately, although it could still be cut in the same operation of the cutting means.

Various modifications may be made without departing from the scope of the present invention - for example the slots may be arranged to receive more than one slat, e.g. two, three, four or five slats. The total height of the slats received in a single slot may still be such that a tight fit is formed to enhance the cutting operation. Different materials and dimensions may be provided for the slatted covering cutting die and blades. Different powering mechanisms may be used, e.g. other than a hydraulic ram.

## Claims

1. A slatted covering cutting die (48) for receiving a slatted covering to be cut, the die defining a plurality of slots (404), each slot being arranged to receive a predetermined number of slats of the covering.

2. A die according to Claim 1, wherein each slot (404) is arranged to receive one slat.

3. A die according to Claim 1 or Claim 2, wherein an upper surface (405) of the slot corresponds in shape to an upper surface of the respective slat to be received.

4. A die according to any preceding claim, wherein the slots (404) are aligned with each other or evenly spaced or both aligned with each other and evenly spaced.

5. A die according to any preceding claim, wherein the die comprises one from the group of:
i) a bottom rail receiving aperture (406) arranged to receive a bottom rail of the covering,
ii) a headrail receiving aperture arranged (408) to receive a headrail of the covering, and optionally the slots (404) are arranged in a row and the headrail receiving aperture (408) is located at an end of the row and optionally the headrail receiving aperture (408), the bottom rail receiving aperture (406) and the slots (404) are aligned with each other,
iii) both i) and ii)

6. A die according to any preceding claim, wherein the die comprises fixing means (402) arranged to fix the die to a die (42) plate of a covering cutter (10) and optionally the fixing means is arranged to removably fix the die to the die plate.

7. A die according to any preceding claim comprising a plurality of selectively removable and replaceable web elements (1176) arranged to define the slots.

8. A die according to any of Claims 5 to 7 comprising a first part (1149) having the bottom rail receiving aperture and the slots and a second part (1150) having the headrail receiving aperture and engagement means (1132, 1174) arranged to provide selective engagement between the first part and the second part.

9. A slatted covering cutter comprising a cutting die according to any preceding claim and a cutting member (36) having a slat cutting surface (36") moveable across the slots of the die to cut slats of the covering received therein.

10. A cutter according to Claim 9, comprising guide means arranged to guide movement of the slat cutting surface across the slots.

11. A cutter according to Claim 9 or Claim 10, wherein the die comprises a headrail receiving aperture (408) and the cutting member (36) comprises a plurality of cutting surfaces including a headrail cutting surface (36').

12. A separation device (900) arranged to separate slats of a slatted covering to be cut comprising spacing means (904) arranged to space the slats at a predetermined distance from each other.

13. Separation device according to Claim 19, comprising one from the group of:
i) a separation device comprising spacing means (904) arranged to separate ends of the slats,
ii) a separation device comprising apertures between adjacent spacing means (904) to receive a predetermined number of slats,
iii) both i) and ii)

14. An end cap (704) for a slatted covering packaging comprising a separation device (900) according to Claim 12 or Claim 13.

15. A packaged slatted covering comprising a plurality of slats, and being packaged in packaging (700) that comprises retaining means (708) arranged to retain the slats together and spacing means arranged to support the slats in spaced relationship to each other.

16. A covering according to Claim 15, wherein the retaining means (708) comprises removable packaging, and additionally or alternatively the retaining means comprises a strap.

17. A method of cutting a slatted covering comprising a plurality of slats comprises the steps of:
locating a predetermined number of slats within slots (404) of a cutting die (48);
moving a cutting member (36) having a slat cutting surface (36") across the slots of the die to cut the located slats.

18. A method according to Claim 17 comprising an initial step of providing the slats in a packaged spaced configuration and optionally wherein the slats in a packaged spaced configuration comprise a covering according to Claim 15 or Claim 16.
